(19) Europäisches Patentamt
European Patent Office
Office européen des brevets

(11) EP 2 041 028 B1

(12) **FASCICULE DE BREVET EUROPEEN**

(45) Date de publication et mention de la délivrance du brevet:
**03.09.2014 Bulletin 2014/36**

(21) Numéro de dépôt: **07803865.0**

(22) Date de dépôt: **13.07.2007**

(51) Int Cl.:
***C01B 33/22*** *(2006.01)* ***C09C 1/28*** *(2006.01)*
***C01B 33/20*** *(2006.01)* ***C01B 33/26*** *(2006.01)*

(86) Numéro de dépôt international:
**PCT/FR2007/001200**

(87) Numéro de publication internationale:
**WO 2008/009799 (24.01.2008 Gazette 2008/04)**

(54) **PROCÉDÉ DE PRÉPARATION DE COMPOSITIONS TALQUEUSES COMPRENANT DES PARTICULES MINÉRALES SILICO/GERMANO-MÉTALLIQUES SYNTHÉTIQUES**

VERFAHREN FÜR DIE ZUBEREITUNG VON SCHIEFERTALKZUSAMMENSETZUNGEN MIT SILIZIUM-, GERMANIUM- UND METALLHALTIGEN SYNTHETISCHEN MINERALPARTIKELN

METHOD FOR PREPARING TALCOSE COMPOSITIONS COMPRISING SYNTHETIC MINERAL PARTICLES CONTAINING SILICON, GERMANIUM AND METAL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.07.2006 FR 0606473**

(43) Date de publication de la demande:
**01.04.2009 Bulletin 2009/14**

(73) Titulaires:
- **Imerys Talc Europe
31100 Toulouse (FR)**
- **Centre National de la Recherche Scientifique (C.N.R.S.)
75016 Paris (FR)**

(72) Inventeurs:
- **MARTIN, François
F-31570 St Foy d'Aigrefeuille (FR)**
- **FERRET, Jocelyne
F-31100 Toulouse (FR)**
- **LEBRE, Cédric
46140 Luzech (FR)**
- **PETIT, Sabine
F-86210 Bonneuil Matours (FR)**
- **GRAUBY, Olivier
F-13390 Auriol (FR)**
- **BONINO, Jean-Pierre
F-31320 Pechabou (FR)**
- **ARSEGUEL, Didier
F-31450 Deyme (FR)**
- **DECARREAU, Alain
F-86000 Poitiers (FR)**
- **FERRAGE, Eric
86000 Poitiers (FR)**

(74) Mandataire: **Cabinet BARRE LAFORGUE & associés
35, rue Lancefoc
31000 Toulouse (FR)**

(56) Documents cités:
**DE-A1- 10 125 879**

- **MARTIN, PETIT, DECARREAU, GRAUBY, HAZEMANN, NOACK: "Experimental study of Si-Ge tetrahedral solid soution in Ni-Co-Mg talcs" THIN SOLID FILMS, vol. 222, 1992, pages 189-195, XP002422974**
- **DECARREAU, MONDESIR, BESSON: "Synthèse et stabilité des stévensites kérolites et talcs, magnésiens et nickelifères, entre 80 et 240°C" C. R. ACAD. SCI. PARIS, vol. 308, no. II, 1989, pages 301-306, XP008075903 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 041 028 B1

## Description

L'invention concerne un procédé de préparation d'une composition, dite composition talqueuse, comprenant au moins un minéral synthétique silico/germano-métallique de formule $(Si_xGe_{1-x})_4M_3O_{10}(OH)_2$, présent sous la forme de particules chimiquement et structurellement très similaires à un talc naturel. La granulométrie de ces particules minérales, dont la distribution est sensiblement unimodale et monodisperse, est fonction des paramètres particuliers appliqués lors de la mise en oeuvre de ce procédé et varie entre quelques dizaines de nanomètres et une dizaine de micromètres. L'invention concerne également des compositions talqueuses, obtenues par la mise en oeuvre de ce procédé, qui manifestent des propriétés, notamment mécaniques et chimiques similaires, voire améliorées, par rapport aux talcs naturels, et sont aptes à se substituer à ces derniers dans de nombreuses applications.

Le talc naturel est un minéral, un silicate de magnésium hydraté de formule $Si_4Mg_3O_{10}(OH)_2$, présentant une organisation structurelle en feuillets superposés ; chaque feuillet présente une structure cristalline composée d'une couche d'octaèdres intercalée entre deux couches de tétraèdres inversées.

Utilisé essentiellement sous forme de fines particules, le talc trouve des applications dans de nombreux secteurs industriels : les thermoplastiques, les élastomères, le papier, la peinture, les vernis, le textile, la métallurgie, la pharmaceutique, la cosmétique, les produits phytosanitaires, les engrais... où il est incorporé dans les compositions, comme charge inerte (pour sa stabilité chimique, par exemple, pour diluer les substances actives, les matériaux coûteux) ou comme adjuvant fonctionnel (par exemple, pour rectifier/renforcer certaines propriétés mécaniques ou électriques de divers matériaux), comme lubrifiant, émollient, agent hydrofuge... Egalement, sa forte capacité d'absorption des huiles ouvre de nombreuses perspectives dans le développement de nouvelles techniques de dépollution.

Pour nombreuses de ces applications, une pureté élevée, une grande lamellarité et une finesse des particules, ainsi qu'une distribution granulométrique et lamellaire étroite, sont recherchées car elles peuvent être déterminantes pour la qualité du produit final.

Or, pour préparer une composition pulvérulente à partir de blocs de talc naturel, les techniques traditionnelles de broyage et de traitement du talc ne permettent aucune maîtrise réellement précise des critères précédemment évoqués.

En effet, il n'existe actuellement aucune composition solide divisée de talc naturel qui soit pure à 100 % ; les particules de cette composition ne répondent pas toutes à la formule chimique $Si_4Mg_3O_{10}(OH)_2$, qui n'est ainsi que très théorique. Le degré de pureté et la nature des impuretés (teneurs plus ou moins importantes en Fe, Al, F, et des traces de Mn, Ti, Cr, Ni, Ca, Na et/ou K) d'un talc naturel est fonction du gisement d'origine.

Egalement, la granulométrie (finesse et distribution granulométrique des particules pulvérulentes) dépend essentiellement des techniques de broyage mécanique et du matériel qui sont employés. A partir d'un talc naturel, les poudres obtenues par broyage mécanique ont généralement une granulométrie de l'ordre de quelques micromètres à quelques centaines de micromètres.

Outre une fluctuation non négligeable de la distribution granulométrique des particules, le broyage mécanique entraîne une détérioration structurelle progressive et significative du talc et l'apparition de nombreux défauts dans sa structure cristalline. Plus le broyage est fin et plus la structure cristalline initiale s'en trouve altérée.

A ce titre, on connaît le NANOTALC®, une composition pulvérulente de talc naturel comprenant des particules de 70-120 nm, préparée avec une méthode de broyage mécanique particulièrement intensive. Hormis une structure cristalline très altérée du minéral, comme toute composition préparée à partir d'un talc naturel, le NANOTALC® n'est pas pur à 100 %.

Par ailleurs, la préparation de talcs synthétiques a fait l'objet d'études théoriques et scientifiques depuis de nombreuses années, sans aboutir jusqu'à maintenant à des résultats pratiques satisfaisants -notamment compatibles avec les contraintes de qualité et de rentabilité d'une exploitation à l'échelle industrielle-.

La publication Martin et al., 1992 ("Experimental study of Si-Ge tetrahedral solid solution in Ni-Co-Mg talcs", Thin Solid Films, vol. 222, pages 189-195) mentionne un procédé de préparation de compositions talqueuse comprenant des particules minérales silico/germanométalliques synthétiques de composition $(Si_xGe_{1-x})_4M_3O_{10}(OH)_2$ avec $M = Niy_{(1)}$, $Co_{y(2)}$ ou $Mg_{y(3)}$.

La publication Decarreau et al., 1989 ("Synthèse et stabilité des stévensites kérolites et talcs, magnésiens et nickélifères, entre 80 et 240°C" -R. Acad. Scie. Paris-, t. 308, série II, p.301-306) mentionne un procédé qui, selon les conditions opératoires appliquées, conduit à la formation plus ou moins spécifique de stévensites, de kérolites et/ou de talcs.

Ce procédé débute par la formation d'un coprécipité initial obtenu par une réaction entre une solution de métasilicate de sodium avec une solution de chlorure de magnésium (ou de nickel). On obtient alors un gel silicométallique fortement hydraté, de consistance gélatineuse et ayant pour formule chimique : $Si_4Mg_3O_{11}$, n'$H_2O$ (ou $Si_4Ni_3O_{11}$, n'$H_2O$). Une série de centrifugation et de lavage à l'eau distillée permet de débarrasser ce gel silicométallique du NaCl formé à l'issue de la réaction de coprécipitation.

Le gel silicométallique est ensuite soumis à une dessiccation poussée permettant de transformer cette composition, fortement hydratée et de texture gélatineuse, en une composition silicométallique solide et déshydratée, ayant pour formule chimique $Si_4Mg_3O_{11}$• $nH_2O$ ; n faisant référence aux quelques molécules d'eau formant un complexe particulièrement stable avec la matière solide, emprisonnées à l'intérieur des pores de cette substance solide (ici, n<<n'). Cette composition silicométallique solide et déshydratée est ensuite broyée/pulvérisée en une fine poudre, avant d'être soumise à un traitement hydrothermal à pression de vapeur d'eau saturante. A cet effet, la poudre est dispersée dans de l'eau distillée (par exemple, 200 mg de poudre pour 30 $cm^3$). Le mélange est placé dans un autoclave (ou réacteur) métallique, à revêtement intérieur en polytétrafluoroéthylène (Téflon®). La durée de ce traitement hydrothermal peut être d'une quinzaine de jours à quelques mois, et la température de traitement peut varier entre 80°C et 240°C.

Cette publication indique qu'un traitement hydrothermal d'une quinzaine de jours, effectué à des températures inférieures à 100°C, conduirait à la formation de stévensites. A des températures de l'ordre de 110-140°C, le traitement conduirait à des kérolites, et à des températures de l'ordre de 170-240°C, on obtiendrait des talcs.

S'agissant des talcs préparés par cette méthode, des expériences de rétromorphose (réalisées notamment à 135°C) ont permis aux auteurs de cette publication de constater une instabilité structurelle qui se traduit par une diminution de la cristallinité et une dérive vers la formation de kérolites.

La méthode de synthèse hydrothermale telle que décrite par la publication Decarreau et *al.,* 1989 ne permet donc pas d'aboutir à une composition de talc de qualité satisfaisante -notamment en terme de cristallinité et de stabilité thermique-.

L'invention vise à proposer un procédé de préparation d'une composition talqueuse de grande pureté, comprenant des particules minérales synthétiques ayant une lamellarité et une granulométrie fine et de faible dispersion, et une structure cristalline thermiquement stable.

L'invention vise à proposer un tel procédé dont la mise en oeuvre est simple et rapide, et est compatible avec les contraintes d'une exploitation industrielle.

La présente invention a aussi pour objectif de proposer des compositions talqueuses pouvant être utilisées en remplacement de compositions de talc naturel, dans diverses de leurs applications. Pour ce faire, une composition talqueuse proposée par l'invention renferme des particules minérales ayant une structure cristalline et lamellaire sensiblement très similaire à la structure d'un talc naturel.

Un autre objectif de l'invention est de proposer un procédé qui puisse être utilisé pour préparer, non seulement, des talcs synthétiques mais, également, des analogues germanifères du talc, c'est-à-dire des composés de structure cristalline rappelant celle du talc naturel, mais dans lesquels les cations $Si^{4+}$ du réseau cristallin sont au moins en partie substitués par des cations $Ge^{4+}$.

De même, l'invention vise à proposer un procédé permettant la préparation de compositions talqueuses comprenant des particules présentant des teintes colorées et/ou de propriétés de conductance électrique et/ou thermique particulières par rapport à un talc naturel.

Pour ce faire, l'invention concerne un procédé de préparation d'une composition, dite composition talqueuse, comprenant des particules minérales silico/germano-métalliques synthétiques ayant une structure cristalline et lamellaire, et une formule :

$$(Si_xGe_{1-x})_4\ M_3O_{10}(OH)_2,$$

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; chaque y(i) étant un nombre réel de l'intervalle [0 ; 1], tel que $\sum_{i=1}^{8} y(i) = 1$ ; y(i) fait référence au ratio suivant :

$$\frac{\text{nombre de sites octaédriques occupés par un cation métallique } (i) \text{ considéré}}{\text{nombre total de sites octaédriques}}$$

- x étant un nombre réel de l'intervalle [0 ; 1] ; il correspond au ratio suivant :

$$\frac{\text{nombre de sites tétraédriques occupés par les cations } Si^{4+}}{\text{nombre total de sites tétraédriques}}$$

Un procédé selon l'invention est caractérisé en ce qu'on réalise un traitement hydrothermal d'un gel silico/germano-métallique de formule - $(Si_xGe_{1-x})_4M_3O_{11}$, $n'H_2O$ -, à l'état liquide.

Selon l'invention, on réalise ledit traitement hydrothermal pendant une durée et avec une température comprise

entre 300°C et 600°C, choisies en fonction de la granulométrie et de la stabilité structurelle souhaitées pour les particules minérales silico/germano-métalliques à préparer.

Selon l'invention, le produit silico/germano-métallique de départ, qui est directement soumis au traitement hydrothermal, se présente sous la forme d'un gel, c'est-à-dire une substance fortement hydratée, ayant une consistance gélatineuse. Ce gel, par son comportement thixotropique, peut être rendu liquide par une simple agitation mécanique.

Pour mettre en oeuvre le traitement hydrothermal du gel silico/germano-métallique, conformément à l'invention, une adjonction complémentaire d'eau peut être envisagée pour prévenir la calcination de la fraction solide (le gel de départ, le produit final, les éventuels produits intermédiaires). La nécessité de cette adjonction d'eau et la quantité d'eau minimale à ajouter pour éviter la calcination dépendent essentiellement du degré d'hydratation du gel initial, de la température de traitement ainsi que de la durée de ce traitement.

La durée du traitement hydrothermal, qui peut aller d'un jour à plusieurs jours, a une grande influence notamment sur la cristallinité du minéral synthétique obtenu au final.

L'invention découle ainsi, notamment, des constatations essentielles et surprenantes suivantes :

- d'une part, un traitement hydrothermal réalisé à des températures relativement élevées (par rapport aux 110-240°C préconisées dans la publication Decarreau et *al.,* 1989), comprises entre 300°C et 600°C, conduit à la formation des particules minérales synthétiques ayant des caractéristiques structurelles (notamment lamellarité, cristallinité) très similaires à celles des talcs naturels, et une excellente stabilité thermique,
- d'autre part, un procédé selon l'invention, notamment en fonction du choix de la température, permet de façon extrêmement simple de synthétiser des particules minérales silico/germano-métalliques synthétiques, stables et pures, de taille et de caractéristiques cristallines très précisément définies et prévisibles.

Avantageusement et selon l'invention, on effectue le traitement hydrothermal dudit gel silico/germano-métallique au moyen d'un autoclave. De préférence on utilise un autoclave en acier à chemisage intérieur en titane ou en acier inoxydable.

Avantageusement et selon l'invention, on rajoute dans l'autoclave, avec ledit gel silico/germano-métallique, une quantité d'eau (de préférence de l'eau distillée) au moins suffisante pour créer, à l'intérieur de cet autoclave porté à la température de traitement, une atmosphère de vapeur saturante.

Avantageusement et selon une variante de mise en oeuvre de l'invention, on réalise ledit traitement hydrothermal à une pression contrôlée de l'ordre de 16 bars.

Avantageusement et selon l'invention, on réalise le traitement hydrothermal avec un gel silico/germano-métallique liquéfié ayant un rapport liquide/solide de l'ordre de 0,83 ; la quantité de liquide étant exprimée en $cm^3$, et la quantité de solide, en grammes. Eventuellement, si nécessaire, on rajoute audit gel silico/germano-métallique liquéfié une quantité d'eau appropriée pour atteindre ce rapport.

Avantageusement et selon l'invention, on réalise le traitement hydrothermal sous agitation. A cet effet, on peut par exemple disposer un barreau aimanté à l'intérieur de l'autoclave.

Au terme d'un traitement hydrothermal conforme à l'invention, on obtient une composition talqueuse se présentant sous la forme d'une solution colloïdale renfermant lesdites particules minérales silico/germano-métalliques synthétiques. Ces particules minérales synthétiques, en solution dans l'eau peuvent se trouver soit dans un état plus ou moins individualisé les unes par rapport aux autres, soit sont organisées en agrégats plus ou moins grossiers formés de particules élémentaires minérales synthétiques, agrégées les unes aux autres. La granulométrie de ces particules élémentaires peut varier entre quelques dizaines de nanomètres à une dizaine de micromètres, selon la température du traitement hydrothermal appliquée, température choisie entre 300°C et 600°C.

Avantageusement et selon l'invention, à l'issue du traitement hydrothermal, on récupère une composition talqueuse colloïdale et on soumet ladite composition talqueuse colloïdale à une étape de séchage suivie d'une étape de broyage mécanique pour obtenir une composition talqueuse comprenant des particules minérales silico/germano-métalliques individualisées. Les agrégats de la composition sont ainsi réduits en particules élémentaires individualisées. La répartition granulométrique de ces particules élémentaires est sensiblement unimodale et monodisperse.

Avantageusement et selon l'invention, le séchage peut être réalisé au moyen d'une étuve ; par exemple, à une température de l'ordre de 60°C, pendant au moins un à deux jours. Le broyage est réalisé avantageusement de façon mécanique ; par exemple avec un mortier, de préférence en agate pour éviter tout risque de contamination de la composition talqueuse.

Avantageusement et selon l'invention, on réalise le traitement hydrothermal à une température de l'ordre de 300°C, par exemple pendant une durée de l'ordre de 3 jours. On obtient alors au final des particules élémentaires dont la granulométrie se situe entre 20 nm et 100 nm.

Avantageusement et selon l'invention, on réalise ledit traitement hydrothermal à une température de l'ordre de 400°C, par exemple pendant une durée de l'ordre de 1,5 jours. On obtient alors au final des particules élémentaires dont la granulométrie est de l'ordre de 3 μm.

Avantageusement et selon l'invention, on réalise le traitement hydrothermal à une température de l'ordre de 500°C-600°C, pour une durée de l'ordre d'un jour (c'est-à-dire environ 24 heures). Les particules de minéral synthétique ainsi synthétisées ont une granulométrie allant de quelques micromètres à une dizaine de micromètres.

L'invention concerne également des compositions talqueuses ainsi préparées, qui peuvent se présenter aussi bien sous la forme de solutions colloïdales refermant lesdites particules silico/germano-métalliques synthétiques -par exemple, une composition de particules silico/germano-métalliques synthétiques présentes sous une forme individualisée et dispersée dans un liquide-, que sous la forme de compositions solides déshydratées dans lesquelles lesdites particules silico/germano-métalliques synthétiques sont, soit organisées en agrégats, soit dispersées en particules élémentaires individualisées.

En particulier, il s'agit de compositions dont les particules solides minérales ont toutes une même entité chimique. En l'occurrence, il s'agit de particules minérales silico/germano-métalliques synthétiques répondant à la formule $(Si_xGe_{1-x})_4M_3O_{10}(OH)_2$. Dans cette formule :

- M désigne au moins un métal divalent et a pour formule $Mg_{y(1)}Co_{y(2)}Zn_{y(3)}Cu_{y(4)}Mn_{y(5)}Fe_{y(6)}Ni_{y(7)}Cr_{y(8)}$ ; chaque $y(i)$ étant un nombre réel de l'intervalle [0 ; 1], tel que $\sum_{i=1}^{8} y(i) = 1,$
- x est un nombre réel de l'intervalle [0 ; 1].

Dans la formule chimique $(Si_xGe_{1-x})_4M_3O_{10}(OH)_2$ d'un minéral silico/germano-métallique synthétique susceptible d'être préparé conformément à l'invention, Si et Ge se réfèrent aux ions silicium et/ou aux ions germanium qui occupent les sites tétraédriques du réseau cristallin. M symbolise les cations métalliques divalents des sites octaédriques (par exemple $Mg^{2+}$, $Co^{2+}$, $Mn^{2+}$, $Zn^{2+}$, $Cu^{2+}$, $Fe^{2+}$, $Ni^{2+}$ et/ou $Cr^{2+}$).

Ainsi, à titre de compositions talqueuses au sens de l'invention, on peut citer, par exemple, des compositions de talc synthétique ; les particules minérales répondent alors à la formule chimique $Si_4Mg_3O_{10}(OH)_2$.

Il peut également s'agir de compositions analogues à une composition de talc, par exemple des compositions dites "germanifères", c'est-à-dire des compositions comprenant des particules de structure cristalline rappelant celle du talc, mais dans lesquels les cations $Si^{4+}$ des sites tétraédriques sont au moins en partie substitués par des cations $Ge^{4+}$. De même, il peut s'agir de compositions dites "dérivées" ou dites "fonctionnalisées", par exemple lorsque les ions magnésium des sites octaédriques, en proportions variables, sont remplacés par d'autres cations divalents en vue d'obtenir des particules aux propriétés physiques, notamment optique et/ou électrique, améliorées par rapport à des particules de talc naturel.

Des analyses réalisées en diffraction des rayons X et en spectroscopie infrarouge ont permis d'établir qu'un traitement hydrothermal conforme à l'invention, appliqué directement sur un gel silicométallique de formule chimique $Si_4Mg_3O_{11}$, $n'H_2O$ (c'est-à-dire un gel silico/germano-métallique de formule chimique $(Si_xGe_{1-x})_4M_3O_{11}$, $n'H_2O$, dans laquelle x est égal à 1, et M désigne le magnésium), conduit à l'obtention d'une composition colloïdale de talc synthétique dont les particules en suspension montrent une grande similitude, en particulier sur le plan de la cristallinité et de la lamellarité, avec un talc naturel (constatation faites notamment à partir de spectres réalisés en transmission dans le moyen infrarouge et en réflexion diffuse dans le proche infrarouge).

Ces analyses ont également permis de constater que la méthode est généralisable à l'ensemble de gels silico/germano-métalliques qui répondent à la formule chimique $(Si_xGe_{1-x})_4M_3O_{11}$, $n'H_2O$ conformément à l'invention. Cette méthode permet la synthèse de compositions talqueuses comprenant des particules minérales silico/germano-métalliques synthétiques de formule $(Si_xGe_{1-x})_4M_3O_{10}(OH)_2$, qui partagent également avec les talcs naturels de grandes similitudes structurelles. Ces particules minérales silico/germano-métalliques synthétiques présentent en effet une organisation nanométrique en feuillets superposés ; chaque feuillet présente une structure cristalline composée d'une couche d'octaèdres (occupés par des ions métalliques divalents : $Mg^{2+}$, $Co^{2+}$, $Zn^{2+}$, $Cu^{2+}$, $Mn^{2+}$, $Fe^{2+}$ et/ou $Ni^{2+}$) intercalées entre deux couches de tétraèdres inversés (occupés par les ions $Si^{4+}$ et/ou $Ge^{4+}$).

On notera cependant que, s'agissant d'une composition de talc synthétique préparée conformément à l'invention (c'est-à-dire une composition talqueuse de formule $(Si_xGe_{1-x})_4M_3O_{10}(OH)_2$ dans laquelle x est égal à 1 et M désigne le magnésium), celle-ci se distingue d'une composition de talc naturel, par sa pureté. Dans une composition de talc synthétique selon l'invention, les particules minérales sont exclusivement des particules de formule chimique $Si_4Mg_3O_{10}(OH)_2$. Or, il n'existe, à l'heure actuelle, aucune composition pulvérulente préparée à partir de talc naturel qui soit à 100 % pure.

En particulier, en diffraction des rayons X, le diffractogramme correspondant, présente un pic de diffraction caractéristique situé à une distance de l'ordre de 9,40-9,70 Å, et correspondant à un plan (001). Pour un talc naturel, le pic de diffraction correspondant est situé à une distance de l'ordre de 9,35 Å.

Egalement, dans une composition de talc synthétique conforme à l'invention, les particules minérales synthétiques présentent conjointement une cristallinité de bonne qualité et une granulométrie extrêmement fine, n'excédant pas une dizaine de micromètres. Avantageusement, les particules silico/germano-métalliques synthétiques d'une composition talqueuse selon l'invention ont une granulométrie, de répartition unimodale et monodisperse, comprise entre 10 nm et 10 $\mu$m.

Or, dans l'état actuel des techniques de broyage, à partir d'un talc naturel, des particules d'une telle finesse (entre 10 et 200 nm) ne peuvent être obtenues qu'avec une "amorphisation" (diminution de la cristallinité) sévère du produit. En diffraction des rayons X, cette amorphisation se traduit notamment par une diminution de l'intensité des pics de diffraction caractéristiques, que sont notamment les pics situés à : 9,35 Å pour le plan (001), 4,55 Å pour le plan (020), 3,14 Å pour le plan (003), et 1,52 Å pour le plan (060).

Outre les méthodes de diffraction des rayons X, les analyses en infrarouges permettent aussi d'identifier les minéraux silico/germano-métalliques selon l'invention, par rapport à des talcs naturels mais également par rapport à d'autres phyllosilicates, telles que par exemple kérolites, stévensites, smectites.

En l'espèce, une composition talqueuse selon l'invention peut être avantageusement identifiée par la structure cristalline et lamellaire de ses particules minérales silico/germano-métalliques synthétique dont l'analyse en diffraction des rayons X, permet l'obtention d'un diffractogramme présentant les pics de diffraction caractéristiques suivants :

- un pic situé à une distance de l'ordre de 9,40-9,68 Å, pour un plan (001) ;
- un pic situé à 4,50-4,75 Å, pour un plan (020) ;
- un pic situé à 3,10-3,20 Å, pour un plan (003) ;
- un pic situé à 1,50-1,55 Å, pour un plan (060).

Avantageusement et selon l'invention, le pic de diffraction du plan (001) est situé à une distance de l'ordre de 9,55-9,65 Å.

Outre la granulométrie extrêmement fine des particules minérales, la stabilité cristalline, la grande pureté et l'aptitude de pouvoir se substituer aux talcs traditionnels dans de nombreuses applications, certaines des compositions talqueuses selon l'invention ont la particularité de présenter des teintes colorées plus ou moins soutenues, qui dépendent de la nature des cations métalliques divalents ($Mg^{2+}$, $Co^{2+}$, $Zn^{2+}$, $Cu^{2+}$, $Mn^{2+}$, $Fe^{2+}$, $Ni^{2+}$, $Cr^{2+}$) et de leur proportion dans le réseau cristallin.

Par exemple, une composition talqueuse selon l'invention est d'un vert soutenu ou d'un vert pâle, lorsque les cations $Ni^{2+}$ sont préférés, au moins en partie, aux cations $Mg^{2+}$ (d'un talc classique) pour occuper les sites octaédriques du réseau cristallin.

De même, lorsque les sites octaédriques du réseau cristallin sont, au moins en partie, occupés par des cations :

- $Co^{2+}$, les compositions talqueuses sont d'un rose plus ou moins prononcé,
- $Cu^{2+}$, les compositions talqueuses sont d'un bleu plus ou moins prononcé,
- $Mn^{2+}$, les compositions talqueuses sont de couleur chocolat,
- $Fe^{2+}$, les compositions talqueuses ont une couleur variant entre gris et rouille,
- $Zn^{2+}$, les compositions talqueuses sont de couleur blanche,
- $Cr^{2+}$, les compositions talqueuses ont une couleur variant du vert au bleu.

Dans ce contexte, il convient de noter que, si les talcs naturels sous forme de roches peuvent présenter des couleurs variées (vert, rose, miel...), leur broyage en fines particules conduit à la formation de produits pulvérulents toujours blancs. En effet, la couleur d'un bloc de talc naturel n'est pas due à des centres colorés propres à la composition chimique de la matière mais à l'agencement particulier des particules de talc, les unes par rapport aux autres ; le broyage en fines particules uniformise l'ensemble et conduit à la perte de la coloration.

L'invention permet d'obtenir des compositions talqueuses colorées malgré la grande finesse des particules minérales synthétiques qui les composent.

Egalement, sur ce même principe de remplacement des cations $Mg^{2+}$, par d'autres cations divalents, en fonction du choix du(des) cation(s) divalent(s) destiné(s) à occuper les sites octaédriques du réseau cristallin, une composition talqueuse selon l'invention peut différer notablement d'une composition de talc naturel, au niveau de ses propriétés de conductance électrique et/ou thermique.

Une composition talqueuse selon l'invention peut se présenter sous une forme "brute", comprenant des particules silico/germano-métalliques synthétiques agrégées les unes aux autres en agrégats. Une telle composition talqueuse peut être notamment issue directement d'un traitement hydrothermal conforme à l'invention, avant qu'elle ne soit soumise à une séquence de broyage.

Une composition talqueuse selon l'invention peut, également et avantageusement, être présentée sous la forme d'une composition, pulvérulente et déshydratée, de particules silico/germano-métalliques synthétiques individualisées. Compte tenu de la pulvérulence de telles particules, du fait de leur faible granulométrie (de quelques dizaines de nanomètres à une dizaine de micromètres), celles-ci sont alors avantageusement mises en solution aux fins de conservation, jusqu'au moment de leur utilisation. Dans ce contexte, une composition talqueuse selon l'invention se présente avantageusement sous la forme d'une composition colloïdale.

Selon un mode particulier de mise en oeuvre, avantageusement et selon l'invention, on prépare le gel silico/germano-métallique de départ par une réaction de coprécipitation entre :

- une composition liquide comprenant au moins une solution saline choisie parmi : une solution de métasilicate de sodium ($Na_2OSiO_2$) et une solution de métagermanate de sodium ($Na_2OGeO_2$) ; les quantités respectives de ces deux solutions étant choisies pour obtenir une composition liquide présentant les ratios de concentration molaire suivants :

$$\frac{[Na_2OSiO_2]}{[Na_2OSiO_2]+[Na_2OGeO_2]} = x \text{ et } \frac{[Na_2OGeO_2]}{[Na_2OSiO_2]+[Na_2OGeO_2]} = 1-x\,;$$

  et

- une solution de chlorure(s) métallique(s) ($MCl_2$) comprenant au moins un chlorure de métal divalent choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; avec un ratio de concentration molaire pour chacun desdits chlorures de métal, tel que :

$$\frac{[\text{métal divalent}]_{(i)}}{[M]_{(totale)}} = y(i)\,;$$

- en présence d'une solution d'acide chlorhydrique.

Ce faisant, on réalise la réaction chimique suivante :

$$4\begin{pmatrix}(Na_2OSiO_2)_x \\ \\ (Na_2OGeO_2)_{1-x}\end{pmatrix}\begin{matrix}3MCl_2 \\ +2HCl \\ mH_2O\end{matrix} \rightleftarrows [(Si_xGe_{1-x})_4M_3O_{11}, n'H_2O]+8NaCl+(m-n'+1)H_2O$$

m, n' et (m-n'+1) étant des nombres entiers positifs.

La préparation de ce type de gel est bien connue et, à titre d'exemple, on peut suivre les instructions données dans la publication Decarreau et al., 1989 ("Synthèse et stabilité des stévensites kérolites et talcs, magnésiens et nickélifères, entre 80 et 240°C" -R. Acad. Scie. Paris-, t. 308, série II, p.301-306).

Avantageusement et en pratique, pour réaliser le gel silico/germano-métallique de formule $(Si_xGe_{1-x})_4M_3O_{11}$, $n'H_2O$, on réalise successivement les étapes suivantes :

- on prépare une composition acide de chlorure de métal ($MCl_2$, $nH_2O$) en faisant dissoudre dans un volume d'eau une quantité appropriée d'une composition de cristaux hygroscopiques d'au moins un chlorure de métal choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; puis on y rajoute l'acide chlorhydrique (HCl),
- on prépare une composition liquide en faisant dissoudre dans un volume d'eau appropriée une quantité d'au moins un sel choisi parmi : le métasilicate de sodium et le métagermanate de sodium,
- on mélange les deux compositions aqueuses dans des proportions choisies (stoechiométrie d'un talc $(Si\text{-}Ge)_4/M_3$) pour provoquer la formation d'un gel de coprécipitation.

Les quantités utilisées des différents réactifs sont choisies pour que les ions $Na^+$ et $Cl^-$ à l'issue de la réaction

de coprécipitation soient présents en quantités équimolaires. La solution saline ($Na^+$, $Cl^-$) ainsi formée peut être éliminée simplement en procédant à une séparation liquide/solide.

Une fois la coprécipitation survenue, on récupère le gel silico/germano-métallique, par exemple, par centrifugation ou filtration, pour le soumettre à un traitement hydrothermal conforme à l'invention. En récupérant ainsi ce gel de coprécipitation, on le débarrasse par la même occasion des ions $Na^+$ et $Cl^-$ qui sont particulièrement néfastes pour une bonne cristallisation des particules minérales silico/germano-métalliques.

Avantageusement et selon l'invention, une fois le gel de coprécipitation récupéré, on réalise au moins un lavage de celui-ci à l'eau distillée, notamment pour le débarrasser de tous les ions $Na^+$ et $Cl^-$ de réaction. Ce lavage peut également être effectué avec de l'eau osmosée, ou simplement avec de l'eau du robinet.

L'invention concerne aussi un procédé de préparation d'une composition talqueuse, et une composition talqueuse, caractérisés en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent aux figures annexées dans lesquelles :

- la figure 1 montre trois spectres d'absorption enregistrés dans le moyen infrarouge, et qui correspondent à trois compositions talqueuses différentes et conformes à l'invention,
- la figure 2 correspond à un agrandissement des spectres précédents, au niveau de la zone comprise entre 3850 $cm^{-1}$ et 3500 $cm^{-1}$,
- la figure 3 montre la zone comprise entre 6000 $cm^{-1}$ à 8000 $cm^{-1}$ de trois spectres d'absorption enregistrés dans le proche infrarouge, correspondant aux trois compositions minérales synthétiques précédemment évoquées,
- les figures 4 et 5 montrent les diffractogrammes RX correspondant aux trois compositions minérales synthétiques précédemment citées, et à une quatrième composition minérale synthétique particulière,
- la figure 6 correspond à une micrographie prise en microscopie électronique à balayage d'une composition de talc synthétique conforme à l'invention,
- les figures 7, 8, 9a et 9b correspondent à des micrographies prises en microscopie électronique en transmission, illustrant la taille nanométrique et la distribution sensiblement unimodale et monodisperse, des particules minérales synthétiques de trois compositions particulières selon l'invention,

A/ - PROTOCOLE GENERAL DE SYNTHESE D'UNE COMPOSITION TALQUEUSE SELON L'INVENTION

1/ - <u>Préparation d'un gel silico/germano-métallique</u>

Le gel silico/germano-métallique est préparé par une coprécipitation selon l'équation de réaction suivante :

$$4\begin{pmatrix}(Na_2OSiO_2)_x\\(Na_2OGeO_2)_{1-x}\end{pmatrix}+2HCl+mH_2O+3\begin{pmatrix}y_{(1)}(MgCl_2)+y_{(2)}(CoCl_2)+y_{(3)}(ZnCl_2)\\+y_{(4)}(CuCl_2)+y_{(5)}(MnCl_2)+y_{(6)}(FeCl_2)\\+y_{(7)}(NiCl_2)+y_{(8)}(CrCl_2)\end{pmatrix}$$

$$\rightleftharpoons [(Si_xGe_{1-x})_4M_3O_{11},n'H_2O]+8NaCl+(m-n'+1)H_2O$$

Cette réaction de coprécipitation permet d'obtenir un gel silico/germano-métallique hydraté ayant la stoechiométrie du talc (4 Si/Ge pour 3 M). Elle est mise en oeuvre à partir de :

1. une solution aqueuse de métasilicate de sodium penta-hydraté ou une solution aqueuse de métagermanate de sodium, ou un mélange de ces deux solutions dans les proportions molaires $x$:(1-$x$),
2. une solution de chlorure de métal, préparée avec un ou plusieurs sels de métal (sous la forme de cristaux hygroscopiques) dilué(s) dans de l'eau distillée, et
3. une solution d'acide chlorhydrique 1N.

La préparation du gel silico/germano-métallique est réalisée en suivant le protocole suivant :

1. on mélange les solutions d'acide chlorhydrique et la solution de chlorure de métal (ou de métaux),
2. on ajoute ce mélange à la solution de métasilicate et/ou de métagermanate de sodium ; le gel de coprécipitation

se forme instantanément,
3. on récupère le gel après centrifugation (au minimum entre 3000 et 7000 tours par minute, pendant 15 minutes) et élimination du surnageant (solution de chlorure de sodium formée),
4. on lave le gel avec de l'eau distillée ou osmosée, ou avec de l'eau du robinet (au minimum deux cycles de lavage/centrifugation sont nécessaires).

A l'issue de cette première phase, on obtient un gel silico/germano-métallique $(Si_xGe_{1-x})_4M_3O_{11}$, n'$H_2O$, fortement hydraté et de consistance gélatineuse. Ce gel présente un comportement thixotropique, c'est-à-dire qu'il passe d'un état visqueux à un état liquide lorsqu'on l'agite, puis retrouve son état initial après un certain temps de repos.

2/ - Traitement hydrothermal du gel silico/germano-métallique

Le gel silico/germano-métallique tel que précédemment obtenu est soumis à un traitement hydrothermal, à une température de 300°C à 600°C.
Pour ce faire :

1. on place le gel, sous forme liquéfiée, dans un réacteur/autoclave ; éventuellement on ajuste le rapport liquide/solide à une valeur de l'ordre de 0,83 (la quantité de liquide étant exprimée en $cm^3$, et la quantité de solide, en grammes),
2. le réacteur/autoclave est placé à l'intérieur d'une étuve, à la température de réaction (établie entre 300°C et 600°C), pendant toute la durée du traitement.

Les inventeurs ont pu constater que de la température du traitement hydrothermal dépendait la granulométrie des particules. Plus cette température est faible, plus les particules synthétisées sont petites (de l'ordre de quelques dizaines de nanomètre à 300°C, contre une dizaine de micromètres pour une température de l'ordre de 600°C).
Egalement, les inventeurs ont pu noter que de la durée du traitement dépendaient essentiellement la cristallinité et la stabilité thermique des particules synthétisées. Le traitement hydrothermal doit être de durée suffisante pour permettre une conversion de la masse gélatineuse initiale en un matériau solide cristallisé et thermiquement stable.
Au cours du traitement hydrothermal, le gel silico/germano-métallique perd progressivement sa consistance gélatineuse pour adopter une structure cristalline particulaire dont la cristallinité augmente avec le temps. Cette cristallisation progressive de la matière peut être constatée par une analyse en diffraction des rayons X, et se traduit sur les diffractogrammes correspondants par l'apparition de pics caractéristiques qui s'affinent et s'intensifient tout au long du traitement.
A l'issue de ce traitement hydrothermal, on obtient une composition talqueuse colloïdale comprenant des particules silico/germano-métalliques en suspension dans l'eau. Au terme de ce traitement hydrothermal :

3. le contenu du réacteur est filtré pour en récupérer la phase solide,
4. on sèche la composition solide à l'étuve à 60°C, pendant 1 jour,
5. une fois sec, la composition solide est broyée avec un mortier en agate.

On obtient au final une composition solide divisée dont la couleur est fonction de la nature du ou des chlorure(s) de métal utilisé(s) pour la préparation du gel silico/germano-métallique (et également, le cas échéant, des proportions respectives de ces chlorures de métal).

B/ - ANALYSE ET CARACTERISATION STRUCTURELLES DE QUELQUES PRODUITS OBTENUS

Parmi les différentes compositions talqueuses obtenues en suivant le protocole précédemment exposé, les résultats d'analyse de certaines d'entre elles seulement sont ci-après rapportés. Ces résultats confirment non seulement que l'invention permet effectivement d'aboutir à la formation de particules minérales synthétiques ayant des caractéristiques structurelles (notamment lamellarité et cristallinité) très similaires à celles des talcs naturels. Ils montrent aussi que, notamment par le choix de la température et de la durée de mise en oeuvre, l'invention permet de façon extrêmement simple de synthétiser des particules minérales silico/germano-métalliques synthétiques, stables et pures, ayant une taille et des caractéristiques cristallines définies et prévisibles.
Les analyses ont notamment été réalisées par spectroscopie infrarouge en transmission, par diffraction des rayons X et par observations en microscopie électronique. Les données recueillies sont présentées aux figures annexées et sont ci-après commentées.

1/ - Analyse en infrarouge

En infrarouge, à titre de référence, il est connu que les bandes de vibration caractéristiques du talc naturel sont les suivantes (avec une résolution de 4 $cm^{-1}$) :

- 3678 $cm^{-1}$ : vibration de la liaison $Mg_3$-OH ;
- 1018 $cm^{-1}$ : vibration de la liaison Si-O-Si ;
- 669 $cm^{-1}$ : vibration de la liaison Mg-O-Si ;
- 7185 $cm^{-1}$ : vibration de la liaison $Mg_3$-OH.

Les figures 1 et 3 présentent les résultats d'analyses réalisées respectivement en moyen infrarouge et en proche infrarouge, sur les trois compositions talqueuses suivantes :

- une composition de talc synthétique, de formule $Si_4Mg_3O_{10}(OH)_2$, préparée selon la méthode précédemment décrite (avec pour cation octaédrique, $Mg^{2+}$), avec un traitement hydrothermal de 300°C pendant 3 jours (sur les figures, cette composition est référencée : Talc Mg 300°C),
- une composition talqueuse de formule $Si_4Ni_3O_{10}(OH)_2$, préparée selon la méthode précédemment décrite (avec pour cation octaédrique, $Ni^{2+}$), avec un traitement hydrothermal de 300°C pendant 3 jours (sur les figures, cette composition est référencée : Talc Ni 300°C),
- une composition talqueuse de formule $Si_4(Co_{0,5}Ni_{0,5})_3O_{10}(OH)_2$, préparée selon la méthode précédemment décrite (avec pour cations octaédriques, $Co^{2+}$ $Ni^{2+}$ dans des proportions équimolaires), avec un traitement hydrothermal de 300°C pendant 3 jours (sur les figures, cette composition est référencée : Talc Co Ni 300°C).

L'acquisition des spectres infrarouge a été réalisée avec un spectromètre Nicolet 510-FTIR sur un domaine de 4000 à 400 $cm^{-1}$.

Le spectre obtenu dans le moyen infrarouge (figures 1 et 2) montre que la composition de talc synthétique -Talc Mg 300°C- est une composition minérale structurellement très similaire à un talc naturel. En particulier, ceci se traduit par la présence des pics représentatifs des vibrations des liaisons $Mg_3$-OH (3678 $cm^{-1}$), Si-O-Si (1018 $cm^{-1}$) et Mg-O-Si (669 $cm^{-1}$).

Les résultats obtenus des mesures effectuées en réflexion diffuse dans le proche infrarouge et dont la figure 3 en montre un agrandissement de la zone comprise entre 8000 $cm^{-1}$ et 6000 $cm^{-1}$, permettent également de constater la présence d'un pic particulièrement prononcé à 7185 $cm^{-1}$. Ce pic situé à 7185 $cm^{-1}$ fait également partie des quatre pics de référence des talcs naturels.

Le pic à 7265 $cm^{-1}$, situé à proximité de ce pic de référence, reflète une légère hydratation des particules de talc synthétiques.

S'agissant des deux autres compositions talqueuses qui sont également données en exemple (Talc Ni 300°C / Talc Co Ni 300°C), leurs spectres d'absorption en infrarouge présentent de nombreuses similitudes avec celui de la composition de talc synthétique (Talc Mg 300°C), à commencer par la présence de quatre pics qui chevauchent ou qui sont à proximité immédiate des quatre pics de référence d'un talc naturel.

Ces similitudes de spectres infrarouges traduisent une grande similitude structurelle existant entre les particules minérales synthétiques des compositions talqueuses selon l'invention, et celle d'un talc naturel. Les éventuels décalages qu'on peut observer pour certains pics (par exemple, au niveau de la zone comprise entre 7300 $cm^{-1}$ et 7000 $cm^{-1}$) résultent essentiellement de la différence de taille entre les cations octaédriques du réseau cristallin.

2/ - Analyses en diffraction des rayons X

En diffraction des rayons X, le talc naturel est connu pour présenter quatre pics de diffraction caractéristiques :

- pour le plan (001), un pic situé à une distance de 9,35 Å ;
- pour le plan (020), un pic situé à 4,55 Å ;
- pour le plan (003), un pic situé à 3,14 Å ;
- pour le plan (060), un pic situé à 1,52 Å.

Les diffractogrammes RX ont été enregistrés sur un appareil XPERT-MPD (PanAnalytical).

Le pas de mesure 2θ est de 0,01° avec un temps d'accumulation de 2 sec/pas. La tension d'accélération est de 40 kV, l'intensité de 55 mA. La relation de Bragg donnant l'équidistance structurale est : $d_{hkl}=0,7703/\sin\theta$.

La figure 4 présente les résultats d'analyses réalisées sur les trois mêmes compositions que précédemment citées :

- $Si_4Mg_3O_{10}(OH)_2$, référencée : Talc Mg 300°C
- $Si_4Ni_3O_{10}(OH)_2$, référencée : Talc Ni 300°C,
- $Si_4(Co_{0,5}Ni_{0,5})_3O_{10}(OH)_2$, référencée : Talc Co Ni 300°C.

Egalement, la figure 5 présente un diffractogramme RX d'une composition $Ge_4Fe_3O_{10}(OH)_2$ préparée conformément à l'invention.

Ces analyses confirment ce qui a été observé en spectroscopie infrarouge. Il existe une grande similitude structurelle entre les particules minérales synthétiques des compositions talqueuses préparées conformément à l'invention et les particules de talc naturel.

En particulier, les pics de diffraction qui correspondent aux plans (020), (003) et (060) ont des positions qui coïncident parfaitement avec celles des pics de diffraction de référence pour le talc naturel.

Seule la position des pics de diffraction du plan (001) diffère légèrement de la position du pic de référence (9,57-9,64 Å, au lieu de 9,35 Å). Cet écart de valeurs s'explique essentiellement :

- par une taille granulométrique nanométrique contrairement à celle des talcs naturels,
- par une très légère hydratation résiduelle des particules minérales synthétiques et,
- éventuellement, par la nature des cations octaédriques du réseau cristallin.

Cependant, il faut noter que l'écart qui résulte de l'hydratation résiduelle diminue avec des temps de réaction plus longs et un séchage plus poussé.

Enfin, la largeur à mi-hauteur des pics des plans (001), (020), (003) et (060) témoigne de la bonne cristallinité des particules minérales silico/germano-métalliques des compositions talqueuses selon l'invention.

A noter que, pour le diffractogramme RX représentatif de des particules $Ge_4Fe_3O_{10}(OH)_2$ (figure 5), la forte intensité du pic de diffraction correspondant au plan (003) est en partie due à une contamination par l'oxyde de germanium.

3/ - <u>Observations microscopiques et appréciation de la granulométrie des particules</u>

Compte tenu de la grande finesse des poudres que peuvent constituer les compositions talqueuses conformes à l'invention, la taille et la distribution granulométrique des particules minérales synthétiques qui les composent ont été appréciées par observation en microscopie électronique à balayage et à effet de champ et en microscopie électronique en transmission. Les micrographies présentées en figures 6, 7, 8, 9a et 9b ont été prises lors de certaines de ces observations.

Les figures 6 et 7 se rapportent à l'observation de deux compositions talqueuses conformes à l'invention, préparées avec un traitement hydrothermal de 300°C, d'une durée de 3 jours. En l'occurrence, il s'agit respectivement d'une composition de talc synthétique de formule $Si_4Mg_3O_{10}(OH)_2$, et d'une composition talqueuse de formule $Si_4Ni_3O_{10}(OH)_2$.

Dans les deux cas, on constate que la granulométrie des particules élémentaires varie entre 20 nm et 100 nm.

Ces deux clichés, à cause de la densité des particules, donnent un aperçu trompeur d'une agglomération des particules les unes aux autres. En réalité, les particules élémentaires sont dans un état individualisé. Eventuellement, une certaine humidité résiduelle pourrait expliquer l'éventualité d'une certaine cohésion entre ces particules.

La figure 8 se rapporte à l'observation d'une composition de talc synthétique de formule $Si_4Mg_3O_{10}(OH)_2$, obtenue après un traitement hydrothermal de 400°C, d'une durée de 30 jours.

L'observation de la micrographie correspondante montre que les particules de talc synthétique ont une granulométrie de l'ordre de 3 $\mu$m.

Les figures 9a et 9b se rapportent à l'observation d'une composition de talc synthétique de formule $Si_4Mg_3O_{10}(OH)_2$, obtenue après un traitement hydrothermal de 600°C, d'une durée de 30 jours. L'observation des deux micrographies correspondantes montre que les particules de talc synthétique présentent une taille moyenne de l'ordre de 6 $\mu$m.

**Revendications**

1. Procédé de préparation d'une composition, dite composition talqueuse, comprenant des particules minérales silico/germano-métalliques synthétiques ayant une structure cristalline et lamellaire, et une formule -$(Si_xGe_{1-x})_4M_3O_{10}(OH)_2$-,

   - M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ;

chaque *y(i)* étant un nombre réel de l'intervalle [0 ; 1], tel que $\sum_{i=1}^{8} y(i) = 1,$

- x étant un nombre réel de l'intervalle [0 ; 1],

ledit procédé étant **caractérisé en ce qu'**on réalise un traitement hydrothermal d'un gel silico/germano-métallique de formule - $(Si_xGe_{1-x})_4M_3O_{11}$, n'$H_2O$ -, à l'état liquide ; on réalise ledit traitement hydrothermal pendant une durée et avec une température comprise entre 300°C et 600°C, choisies en fonction de la granulométrie et de la stabilité structurelle souhaitées pour les particules minérales silico/germano-métalliques à préparer.

2. Procédé selon la revendication 1, **caractérisé en ce que**, à l'issue dudit traitement hydrothermal, on récupère une composition talqueuse colloïdale et on soumet ladite composition talqueuse colloïdale à une étape de séchage suivie d'une étape de broyage mécanique pour obtenir une composition talqueuse comprenant des particules minérales silico/germano-métalliques individualisées.

3. Procédé selon l'une des revendications 1 ou 2, **caractérisé en ce qu'**on prépare ledit gel silico/germano-métallique par une réaction de coprécipitation entre :

   - une composition liquide comprenant au moins une solution saline choisie parmi : une solution de métasilicate de sodium ($Na_2OSiO_2$) et une solution de métagermanate de sodium ($Na_2OGeO_2$) ; et présentant les ratios de concentration molaire suivants :

$$\frac{[Na_2OSiO_2]}{[Na_2OSiO_2]+[Na_2OGeO_2]} = x \text{ et } \frac{[Na_2OGeO_2]}{[Na_2OSiO_2]+[Na_2OGeO_2]} = 1-x \text{ ;}$$

   et

   - une solution de chlorure(s) métallique(s) ($MCl_2$) comprenant au moins un chlorure de métal divalent choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; avec un ratio de concentration molaire pour chacun desdits chlorures de métal, tel que :

$$\frac{[\text{métal divalent } (i)]}{[M]_{(\text{totale})}} = y(i)$$

   - en présence d'une solution d'acide chlorhydrique.

4. Procédé selon l'une des revendications 1 à 3, **caractérisé en ce qu'**on effectue le traitement hydrothermal dudit gel silico/germano-métallique au moyen d'un autoclave.

5. Procédé selon l'une des revendications 1 à 4, **caractérisé en ce qu'**on réalise le traitement hydrothermal avec un gel silico/germano-métallique liquéfié ayant un rapport liquide/solide de l'ordre de 0,83 ; la quantité de liquide étant exprimée en $cm^3$, et la quantité de solide, en grammes.

6. Procédé selon l'une des revendications 1 à 5, **caractérisé en ce qu'**on réalise le traitement hydrothermal à une température de l'ordre de 300°C.

7. Procédé selon l'une des revendications 1 à 5, **caractérisé en ce qu'**on réalise le traitement hydrothermal à une température de l'ordre de 400°C.

8. Procédé selon l'une des revendications 1 à 5, **caractérisé en ce qu'**on réalise ledit traitement hydrothermal à une température de l'ordre de 500°C-600°C.

9. Procédé selon l'une des revendications 1 à 8, **caractérisé en ce qu'**on réalise ledit traitement hydrothermal à une pression contrôlée de l'ordre de 16 bars.

**10.** Procédé selon l'une des revendications 1 à 9, **caractérisé en ce qu'**on réalise le traitement hydrothermal sous agitation.

**11.** Procédé selon l'une des revendications 1 à 10, **caractérisé en ce que** pour préparer ledit gel silico/germano-métallique de formule $(Si_xGe_{1-x})_4M_3O_{11}$, n'$H_2O$, on réalise successivement les étapes suivantes :

- on prépare une composition acide de chlorure de métal en faisant dissoudre dans un volume d'eau une quantité appropriée d'une composition de cristaux hygroscopiques d'au moins un chlorure de métal choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; puis on y rajoute l'acide chlorhydrique (HCl),
- on prépare une composition liquide en faisant dissoudre dans un volume d'eau appropriée une quantité d'au moins un sel choisi parmi : le métasilicate de sodium et le métagermanate de sodium,
- on mélange les deux compositions aqueuses dans des proportions choisies pour provoquer la formation d'un gel de coprécipitation ; les quantités utilisées des différents réactifs étant choisies pour que les ions $Na^+$ et $Cl^-$ à l'issue de la réaction de coprécipitation soient présents en quantité équimolaire.

**12.** Procédé selon la revendication 11, **caractérisé en ce que**, avant de réaliser le traitement hydrothermal dudit gel silico/germano-métallique, on lave celui-ci avec de l'eau distillée pour le débarrasser du chlorure de sodium formé lors de la réaction de coprécipitation.

**13.** Composition talqueuse comprenant des particules minérales silico/germano-métalliques synthétiques de formule $(Si_xGe_{1-x})_4M_3O_{10}(OH)_2$ - dans laquelle :

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; chaque *y(i)* étant un nombre réel de l'intervalle [0 ; 1], tel que $\sum_{i=1}^{8} y(i) = 1,$
- x étant un nombre réel de l'intervalle [0 ; 1],

ladite composition étant **caractérisée en ce qu'**une analyse en diffraction des rayons X desdites particules minérales silico/germano-métalliques synthétiques conduit à l'obtention d'un diffractogramme présentant des pics de diffraction caractéristiques suivants :
- un pic situé à une distance de l'ordre de 9,40-9,68 Å, pour un plan (001) ;
- un pic situé à 4,50-4,75 Å, pour un plan (020) ;
- un pic situé à 3,10-3,20 Å, pour un plan (003) ;
- un pic situé à 1,50-1,55 Å, pour un plan (060).

**14.** Composition talqueuse selon la revendication 13, **caractérisée en ce que** le pic de diffraction correspondant au plan (001) est situé à une distance de l'ordre de 9,55-9,65 Å.

**15.** Composition talqueuse selon l'une des revendications 13 ou 14, **caractérisée en ce que** lesdites particules silico/germano-métalliques synthétiques ont une granulométrie de répartition unimodale et monodisperse, comprise entre 10 nm et 10 μm.

**16.** Composition talqueuse selon l'une des revendications 13 à 15, **caractérisée en ce que** lesdites particules silico/germano-métalliques synthétiques sont présentes sous une forme individualisée et pulvérulente.

**17.** Composition talqueuse selon l'une des revendications 13 à 16, **caractérisée en ce que** lesdites particules silico/germano-métalliques synthétiques sont présentes sous une forme individualisée et dispersée dans un liquide.

**18.** Composition talqueuse selon l'une des revendications 13 à 17, **caractérisée en ce que** lesdites particules silico/germano-métalliques synthétiques sont présentes sous une forme agglomérée les unes aux autres et forment des agrégats.

**Patentansprüche**

1. Verfahren zur Herstellung einer Verbindung, genannt Talkverbindung, umfassend Silizium-/Germanium-metallhaltige synthetische Mineralpartikel mit einer Kristall- und Lamellenstruktur und einer Formel - $(Si_xGe_{1-x})_4M_3O_{10}(OH)_2$-,

   - wobei M mindestens ein zweiwertiges Metall bezeichnet und die Formel $Mg_{y(1)}\ Co_{y(2)}\ Zn_{y(3)}\ Cu_{y(4)}\ Mn_{y(5)}\ Fe_{y(6)}\ Ni_{y(7)}\ Cr_{y(8)}$ aufweist; wobei jedes *y(i)* eine reelle Zahl des Intervalls [0; 1] ist, wie $\sum_{i=1}^{8} y(i) = 1,$
   - wobei x eine reelle Zahl des Intervalls [0; 1] ist,

   wobei das Verfahren **dadurch gekennzeichnet ist, dass** eine hydrothermale Behandlung eines Silizium-/Germanium-metallhaltigen Gels der Formel - $(Si_xGe_{1-x})_4\ M_3\ O_{11}$, $n'H_2O$- im flüssigen Zustand durchgeführt wird; die hydrothermale Behandlung während eines Zeitraums und bei einer Temperatur durchgeführt wird, die zwischen 300 °C und 600 °C liegt, ausgewählt je nach der Granulometrie und der strukturellen Stabilität, die für die Silizium-/Germanium-metallhaltigen synthetischen Mineralpartikel, die zubereitet werden sollen, gewünscht werden.

2. Verfahren nach Anspruch 1, **dadurch gekennzeichnet, dass** nach der hydrothermalen Behandlung eine kolloidale Talkverbindung zurückgewonnen und die kolloidale Talkverbindung einem Schritt des Trocknens unterzogen wird, gefolgt von einem Schritt des mechanischen Mahlens, um eine Talkverbindung zu erhalten, die individualisierte Silizium-/Germanium-metallhaltige Mineralpartikel umfasst.

3. Verfahren nach einem der Ansprüche 1 oder 2, **dadurch gekennzeichnet, dass** das Silizium-/Germanium-metallhaltige Gel durch eine Co-Präzipitationsreaktion zwischen:

   - einer flüssigen Verbindung, die mindestens eine Salzlösung umfasst, ausgewählt aus: einer Natriummetasilikat-Lösung ($Na_2OSiO_2$) und einer Natriummetagermanat-Lösung ($Na_2OGeO_2$); und die die folgenden molaren Konzentrationsverhältnisse aufweist:

   $$\frac{[Na_2OSiO_2]}{[Na_2OSiO_2]+[Na_2OGeO_2]} = x \quad \text{und} \quad \frac{[Na_2OGeO_2]}{[Na_2OSiO_2]+[Na_2OGeO_2]} = 1-x\ ;$$

   und
   - einer Lösung aus Metallchlorid(en) ($MCl_2$), umfassend mindestens ein zweiwertiges Metallchlorid, ausgewählt aus: Magnesiumchlorid ($MgCl_2$), Nickelchlorid ($NiCl_2$), Kobaltchlorid ($CoCl_2$), Zinkchlorid ($ZnCl_2$), Kupferchlorid ($CuCl_2$), Maganchlorid ($MnCl_2$), Eisenchlorid ($FeCl_2$), Chromchlorid ($CrCl_2$); mit einem molaren Konzentrationsverhältnis für jedes der Metallchloride, wie

   $$\frac{[\text{zweiwertiges Metall}\ (i)]}{[M]_{(\text{ges.})}} = y(i)$$

   - in Anwesenheit einer Salzsäurelösung zubereitet wird.

4. Verfahren nach einem der Ansprüche 1 bis 3, **dadurch gekennzeichnet, dass** die hydrothermale Behandlung des Silizium-/Germanium-metallhaltigen Gels mit Hilfe eines Autoklavs durchgeführt wird.

5. Verfahren nach einem der Ansprüche 1 bis 4, **dadurch gekennzeichnet, dass** die hydrothermale Behandlung mit einem verflüssigten Silizium-/Germanium-metallhaltigen Gel mit einem Verhältnis Flüssigkeit/Feststoff im Bereich von 0,83 durchgeführt wird, wobei die Menge der Flüssigkeit in $cm^3$ und die Menge des Feststoffs in Gramm ausgedrückt wird.

6. Verfahren nach einem der Ansprüche 1 bis 5, **dadurch gekennzeichnet, dass** die hydrothermale Behandlung bei einer Temperatur im Bereich von 300 °C durchgeführt wird.

7. Verfahren nach einem der Ansprüche 1 bis 5, **dadurch gekennzeichnet, dass** die hydrothermale Behandlung bei einer Temperatur im Bereich von 400 °C durchgeführt wird.

8. Verfahren nach einem der Ansprüche 1 bis 5, **dadurch gekennzeichnet, dass** die hydrothermale Behandlung bei einer Temperatur im Bereich von 500 °C-600 °C durchgeführt wird.

9. Verfahren nach einem der Ansprüche 1 bis 8, **dadurch gekennzeichnet, dass** die hydrothermale Behandlung bei einem kontrollierten Druck im Bereich von 16 Bar durchgeführt wird.

10. Verfahren nach einem der Ansprüche 1 bis 9, **dadurch gekennzeichnet, dass** die hydrothermale Behandlung unter Rühren durchgeführt wird.

11. Verfahren nach einem der Ansprüche 1 bis 10, **dadurch gekennzeichnet, dass**, um das Silizium-/Germanium-metallhaltige Gel der Formel $(Si_xGe_{1-x})_4M_3\ O_{11},n'H_2O$ zuzubereiten, aufeinander folgend die folgenden Schritte durchgeführt werden:

    - Zubereiten einer sauren Metallchlorid-Verbindung durch die Auflösung in einem Wasservolumen einer geeigneten Menge einer Verbindung aus hygroskopischen Kristallen von mindestens einem zweiwertigen Metallchlorid, ausgewählt aus: Magnesiumchlorid ($MgCl_2$), Nickelchlorid ($NiCl_2$), Kobaltchlorid ($CoCl_2$), Zinkchlorid ($ZnCl_2$), Kupferchlorid ($CuCl_2$), Manganchlorid ($MnCl_2$), Eisenchlorid ($FeCl_2$), Chromchlorid ($CrCl_2$); dann wird diesem Hydrochlorsäure (HCl) zugegeben,
    - Zubereiten einer flüssigen Verbindung durch die Auflösung in einem geeigneten Wasservolumen einer Menge von mindestens einem Salz, ausgewählt aus: Natriummetasilikat und Natriummetagermanat,
    - Mischen der zwei wässrigen Verbindungen in ausgewählten Verhältnissen, um die Bildung eines Co-Präzipitationsgels zu verursachen; wobei die verwendeten Mengen der verschiedenen Reagenzien ausgewählt sind, damit die $Na^+$ und $Cl^-$ -Ionen nach der Co-Präzipitationsreaktion in einer equimolären Menge vorhanden sind.

12. Verfahren nach Anspruch 11, **dadurch gekennzeichnet, dass**, vor der Durchführung der hydrothermalen Behandlung des Silizium-/Germanium-metallhaltigen Gels, dieses mit destilliertem Wasser gewaschen wird, um es vom Natriumchlorid zu befreien, das bei der Co-Präzipitationsreaktion gebildet wird.

13. Talkverbindung, umfassend Silizium-/Germanium-metallhaltige synthetische Mineralpartikel, der Formel - $(Si_xGe_{1-x})_4M_3O_{10}(OH)_2$ - wobei:

    - M mindestens ein zweiwertiges Metall bezeichnet und die Formel $Mg_{y(1)}\ Co_{y(2)}\ Zn_{y(3)}\ Cu_{y(4)}\ Mn_{y(5)}\ Fe_{y(6)}\ Ni_{y(7)}\ Cr_{y(8)}$ aufweist; wobei jedes *y(i)* eine reelle Zahl des Intervalls [0; 1] ist, wie $\sum_{i=1}^{8} y(i) = 1,$
    - wobei x eine reelle Zahl des Intervalls [0; 1] ist,

    wobei die Verbindung **dadurch gekennzeichnet ist, dass** eine Diffraktionsanalyse der Röntgenstrahlen der Silizium-/Germanium-metallhaltigen synthetischen Mineralpartikel zum Erhalt eines Diffraktogramms führt, das die folgenden charakteristischen Diffraktionsspitzen aufweist:
    - eine Spitze, die sich in einem Abstand im Bereich von 9,40 - 9,68 Å befindet, für eine Ebene (001) ;
    - eine Spitze, die sich bei 4,50 - 4,75 Å befindet, für eine Ebene (020);
    - eine Spitze, die sich bei 3,10 - 3,20 Å befindet, für eine Ebene (003);
    - eine Spitze, die sich bei 1,50 - 1,55 Å befindet, für eine Ebene (060).

14. Talkverbindung nach Anspruch 13, **dadurch gekennzeichnet, dass** sich die Diffraktionsspitze, die der Ebene (001) entspricht, in einem Abstand im Bereich von 9,55 - 9,65 Å befindet.

15. Talkverbindung nach einem der Ansprüche 13 oder 14, **dadurch gekennzeichnet, dass** die Silizium-/Germanium-metallhaltigen synthetischen Partikel eine Granulometrie mit unimodaler und monodisperser Verteilung aufweisen, die zwischen 10 nm und 10 $\mu$m liegt.

16. Talkverbindung nach einem der Ansprüche 13 bis 15, **dadurch gekennzeichnet, dass** die Silizium-/Germanium-metallhaltigen synthetischen Partikel eine individualisierte und pulvrige Form aufweisen.

17. Talkverbindung nach einem der Ansprüche 13 bis 16, **dadurch gekennzeichnet, dass** die Silizium-/Germanium-metallhaltigen synthetischen Partikel eine individualisierte und dispergierte Form in einer Flüssigkeit aufweisen.

18. Talkverbindung nach einem der Ansprüche 13 bis 17, **dadurch gekennzeichnet, dass** die Silizium-/Germanium-metallhaltigen synthetischen Partikel eine miteinander agglomerierte Form aufweisen und Aggregate bilden.

**Claims**

1. Method for preparing a composition, that is a talcose composition, comprising synthetic mineral particles which contain silicon, germanium and metal, have a crystalline and lamellar structure, and are of formula - $(Si_xGe_{1-x})_4M_3O_{10}(OH)_2$ -

- **characterised in that** M is at least one divalent metal and is of formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* being a real number of the interval [0; 1], such that

$$\sum_{i=1}^{8} y(i) = 1,$$

- *x* being a real number of the interval [0; 1],

said method being **characterised in that** it comprises carrying out a hydrothermal treatment of a gel containing silicon, germanium and metal of formula - $(Si_xGe_{1-x})_4M_3O_{11},n'H_2O$ - in the liquid state; said hydrothermal treatment is carried out for a period of time and at a temperature, of from 300°C to 600°C, that are chosen according to the particle size and structural stability desired for the mineral particles containing silicon, germanium and metal that are to be prepared.

2. Method according to claim 1, **characterised in that**, following said hydrothermal treatment, a colloidal talcose composition is recovered and said colloidal talcose composition is subjected to a drying step followed by a mechanical grinding step to obtain a talcose composition comprising individualized mineral particles containing silicon, germanium and metal.

3. Method according to either claim 1 or claim 2, **characterised in that** said gel containing silicon, germanium and metal is prepared by a coprecipitation reaction between:

- a liquid composition comprising at least one saline solution selected from: a sodium metasilicate ($Na_2OSiO_2$) solution and a sodium metagermanate ($Na_2OGeO_2$) solution; and having the following molar concentration ratios:

$$\frac{[Na_2OSiO_2]}{[Na_2OSiO_2]+[Na_2OGeO_2]} = x \text{ and } \frac{[Na_2OGeO_2]}{[Na_2OSiO_2]+[Na_2OGeO_2]} = 1 - x;$$

and

- a solution of metal chloride(s) ($MCl_2$) comprising at least one divalent metal chloride selected from: magnesium chloride ($MgCl_2$), nickel chloride ($NiCl_2$), cobalt chloride ($CoCl_2$), zinc chloride ($ZnCl_2$), copper chloride ($CuCl_2$), manganese chloride ($MnCl_2$), iron chloride ($FeCl_2$), chromium chloride ($CrCl_2$); with a molar concentration ratio for each of said metal chlorides such that:

$$\frac{[\text{divalent metal}_{(i)}]}{[M]_{(\text{total})}} = y(i);$$

- in the presence of a hydrochloric acid solution.

4. Method according to any one of claims 1 to 3, **characterised in that** the hydrothermal treatment of said gel containing silicon, germanium and metal is carried out by means of an autoclave.

5. Method according to any one of claims 1 to 4, **characterised in that** the hydrothermal treatment is carried out with a liquefied gel containing silicon, germanium and metal having a liquid/solid ratio of the order of 0.83; the amount of liquid being expressed in $cm^3$ and the amount of solid in grams.

6. Method according to any one of claims 1 to 5, **characterised in that** the hydrothermal treatment is carried out at a temperature of the order of 300°C.

7. Method according to any one of claims 1 to 5, **characterised in that** the hydrothermal treatment is carried out at a temperature of the order of 400°C.

8. Method according to any one of claims 1 to 5, **characterised in that** said hydrothermal treatment is carried out at a temperature of the order of from 500°C to 600°C.

9. Method according to any one of claims 1 to 8, **characterised in that** said hydrothermal treatment is carried out at a controlled pressure of the order of 16 bar.

10. Method according to any one of claims 1 to 9, **characterised in that** the hydrothermal treatment is carried out with stirring.

11. Method according to any one of claims 1 to 10, **characterised in that**, in order to prepare said gel containing silicon, germanium and metal of formula $(Si_xGe_{1-x})_4M_3O_{11},n'H_2O$, the following steps are carried out in succession:

- an acidic composition of metal chloride is prepared by dissolving, in one volume of water, an appropriate amount of a composition of hygroscopic crystals of at least one metal chloride selected from: magnesium chloride ($MgCl_2$), nickel chloride ($NiCl_2$), cobalt chloride ($CoCl_2$), zinc chloride ($ZnCl_2$), copper chloride ($CuCl_2$), manganese chloride ($MnCl_2$), iron chloride ($FeCl_2$), chromium chloride ($CrCl_2$); then hydrochloric acid (HCl) is added thereto;
- a liquid composition is prepared by dissolving, in an appropriate volume of water, an amount of at least one salt selected from: sodium metasilicate and sodium metagermanate;
- the two aqueous compositions are mixed in proportions chosen to cause the formation of a coprecipitation gel; the amounts of the various reagents that are employed being chosen so that the $Na^+$ and $Cl^-$ ions are present in an equimolar amount following the coprecipitation reaction.

12. Method according to claim 11, **characterised in that**, before the hydrothermal treatment of said gel containing silicon, germanium and metal is carried out, the gel is washed with distilled water in order to remove therefrom the sodium chloride formed during the coprecipitation reaction.

13. Talcose composition that comprises synthetic mineral particles containing silicon, germanium and metal of formula - $(Si_xGe_{1-x})_4M_3O_{10}(OH)_2$ - in which:

- M denotes at least one divalent metal and has the formula $Mg_{y(1)}Co_{y(2)}Zn_{y(3)}Cu_{y(4)}Mn_{y(5)}Fe_{y(6)}Ni_{y(7)}Cr_{y(8)}$;

each $y(i)$ being a real number of the interval [0; 1], such that $\sum_{i=1}^{8} y(i) = 1$,
- x is a real number of the interval [0; 1],
said composition being **characterised in that** in an X-ray diffraction analysis of said synthetic mineral particles containing silicon, germanium and metal, a diffractogram having the following characteristic diffraction peaks is obtained:
- a peak located at a distance of the order of 9.40-9.68 Å, for a plane (001);
- a peak located at 4.50-4.75 Å, for a plane (020);
- a peak located at 3.10-3.20 Å, for a plane (003);
- a peak located at 1.50-1.55 Å, for a plane (060).

14. Talcose composition according to claim 13, **characterised in that** the diffraction peak corresponding to plane (001) is located at a distance of the order of 9.55-9.65 Å.

**15.** Talcose composition according to either claim 13 or claim 14, **characterised in that** said synthetic particles containing silicon, germanium and metal have a unimodal and monodisperse particle size distribution of from 10 nm to 10 μm.

**16.** Talcose composition according to any one of claims 13 to 15, **characterised in that** said synthetic particles containing silicon, germanium and metal are present in individualized and pulverulent form.

**17.** Talcose composition according to any one of claims 13 to 16, **characterised in that** said synthetic particles containing silicon, germanium and metal are present in individualized form dispersed in a liquid.

**18.** Talcose composition according to any one of claims 13 to 17, **characterised in that** said synthetic particles containing silicon, germanium and metal are present in a form agglomerated with one another and form aggregates.

Figure 1

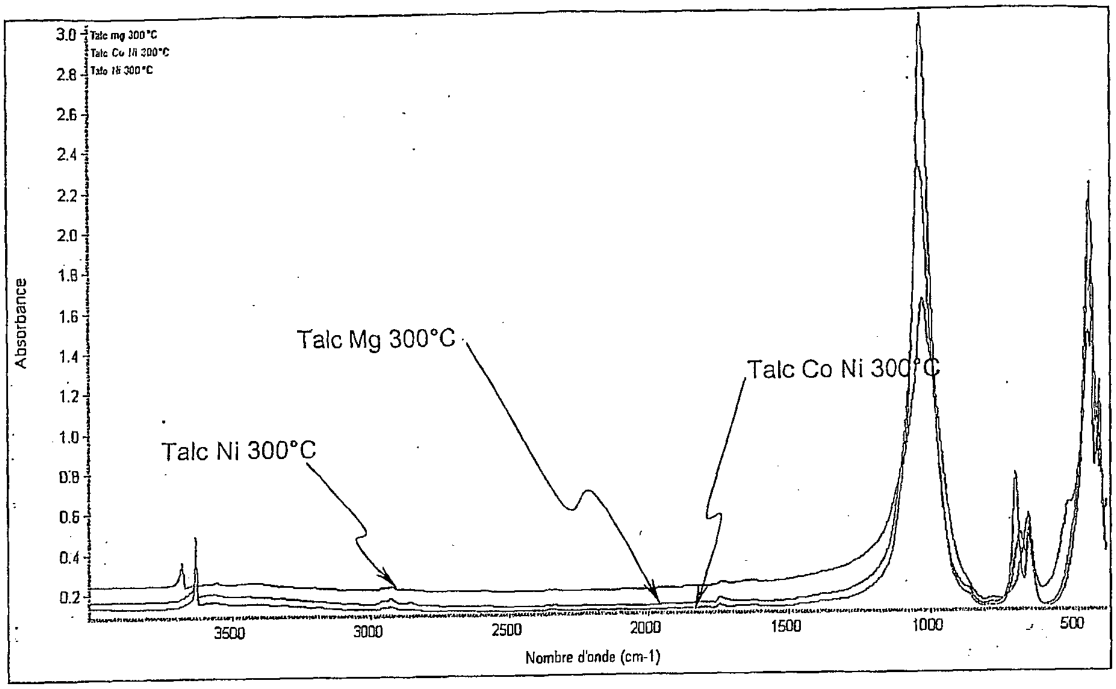


Figure 2

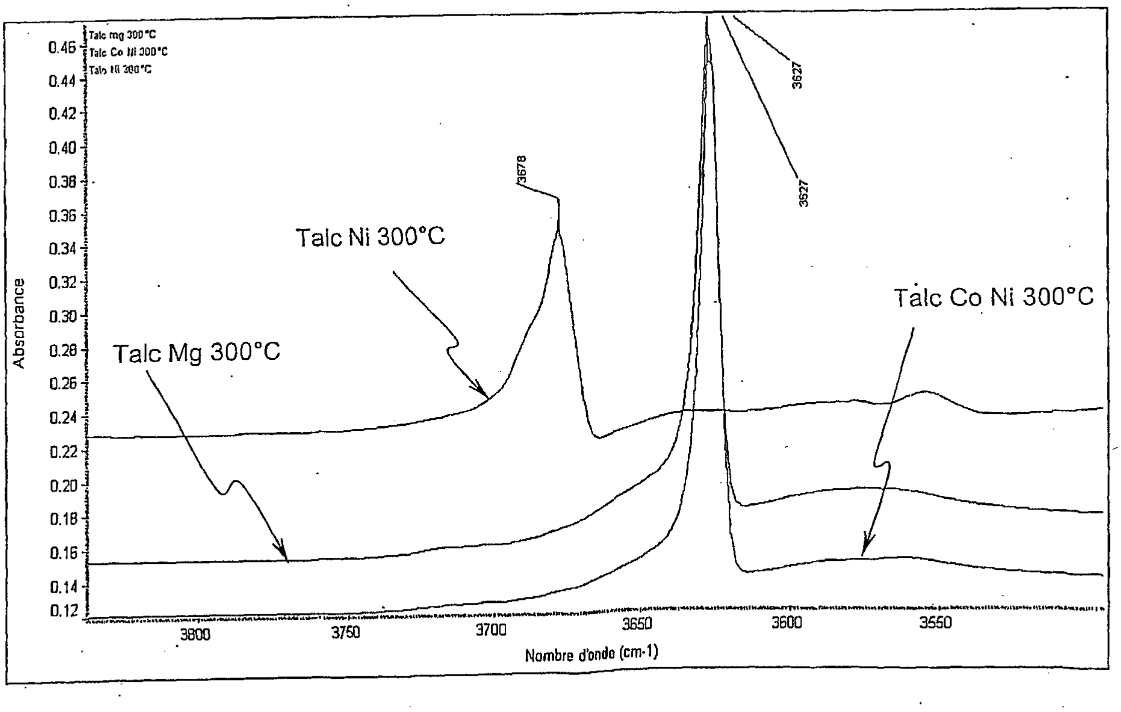

Figure 3

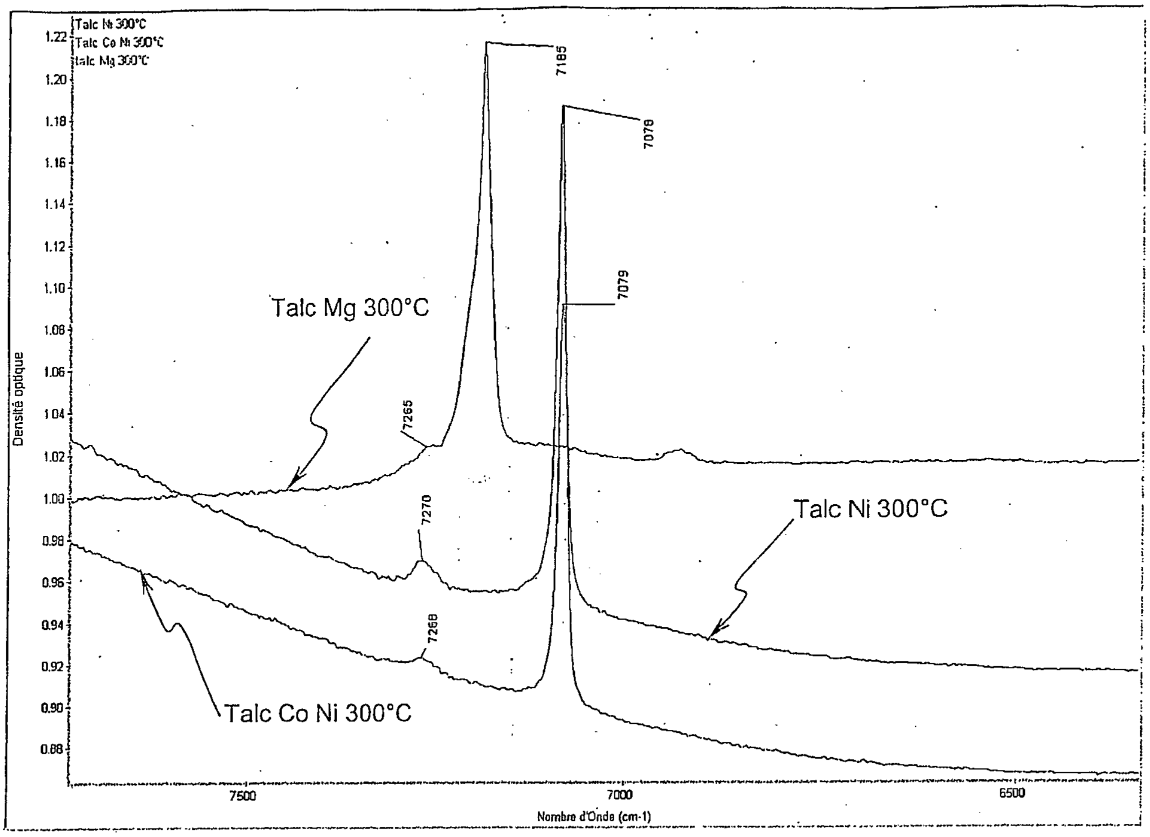


Figure 4

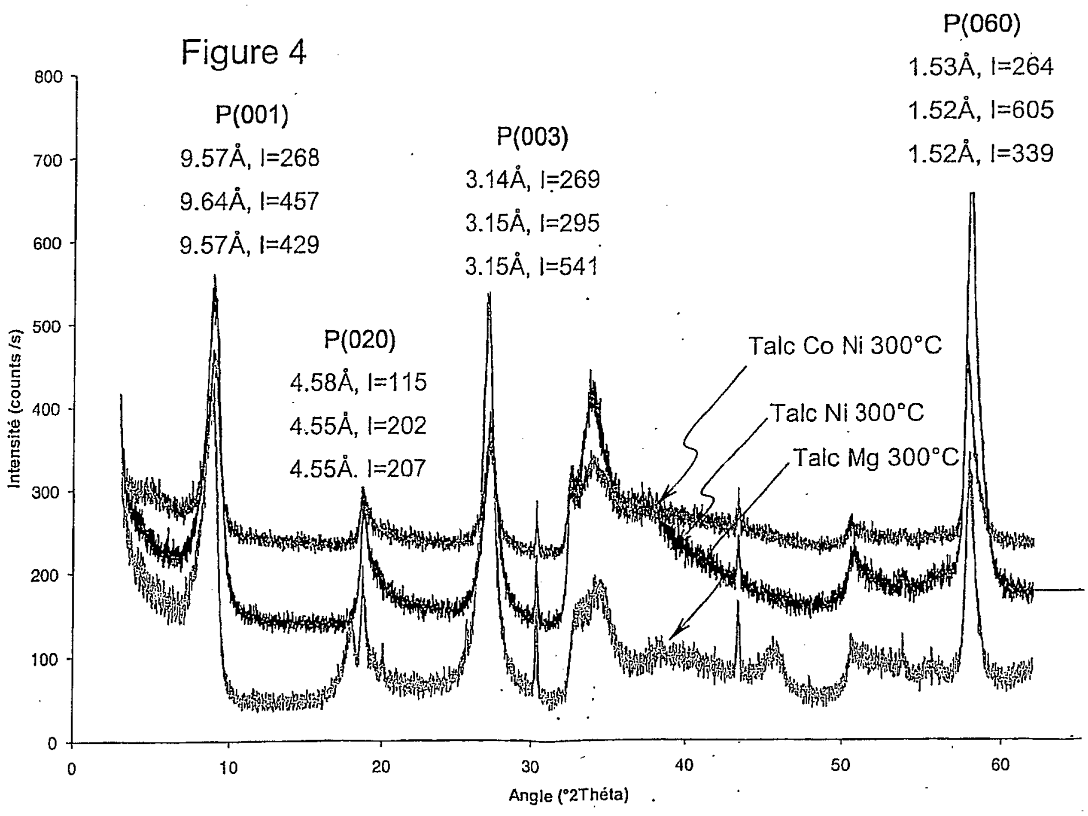

Figure 5

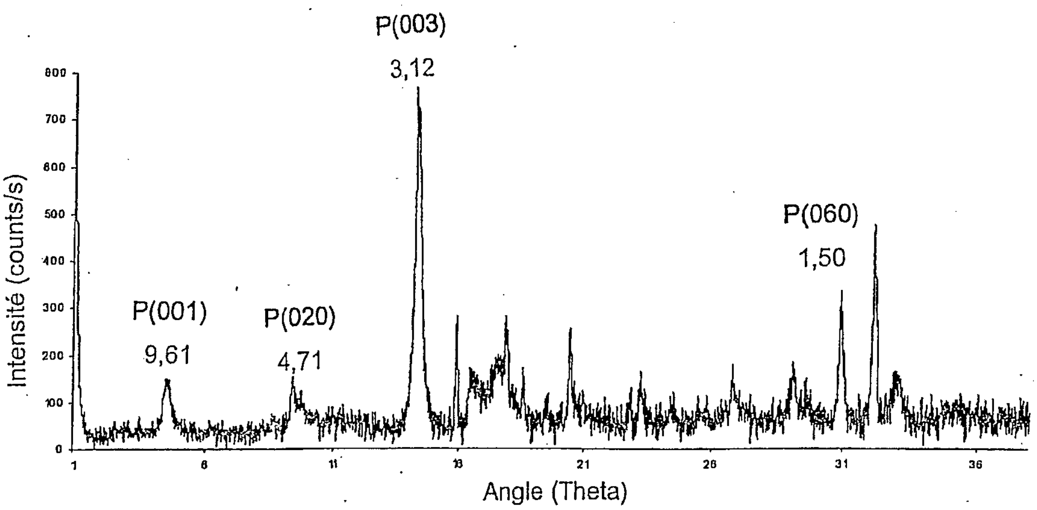


Figure 6

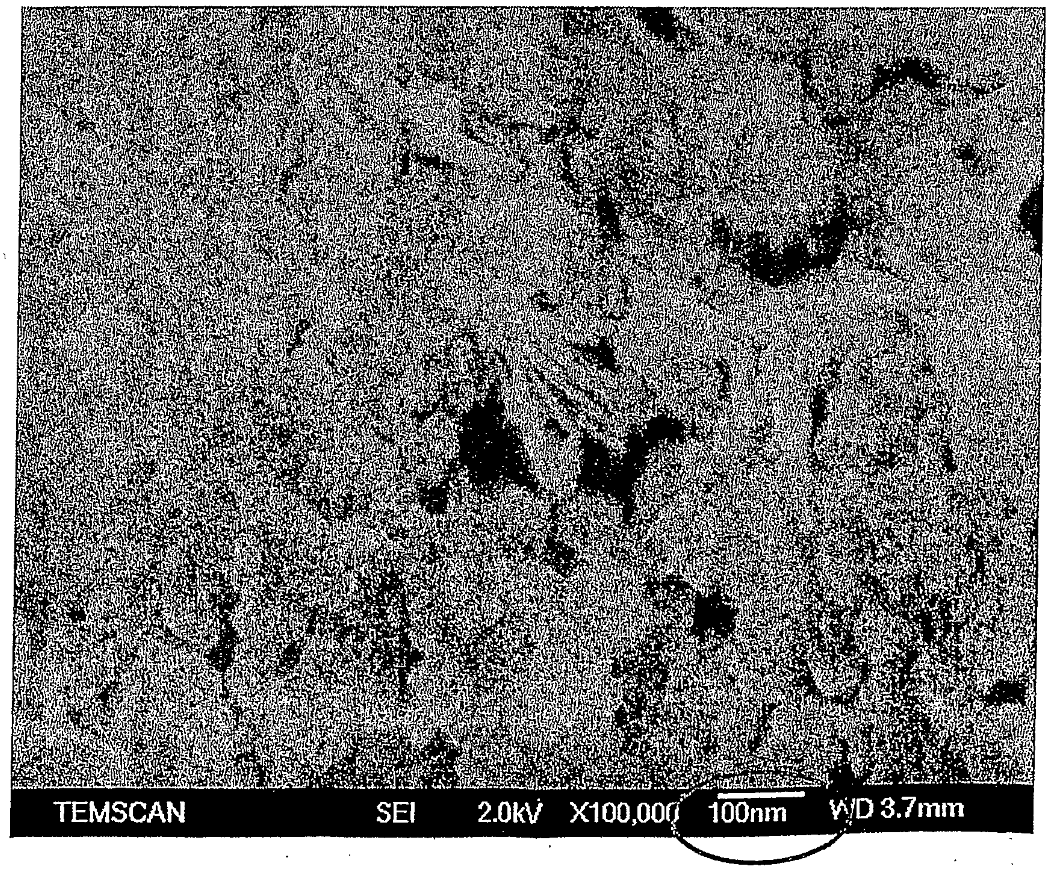

Figure 7

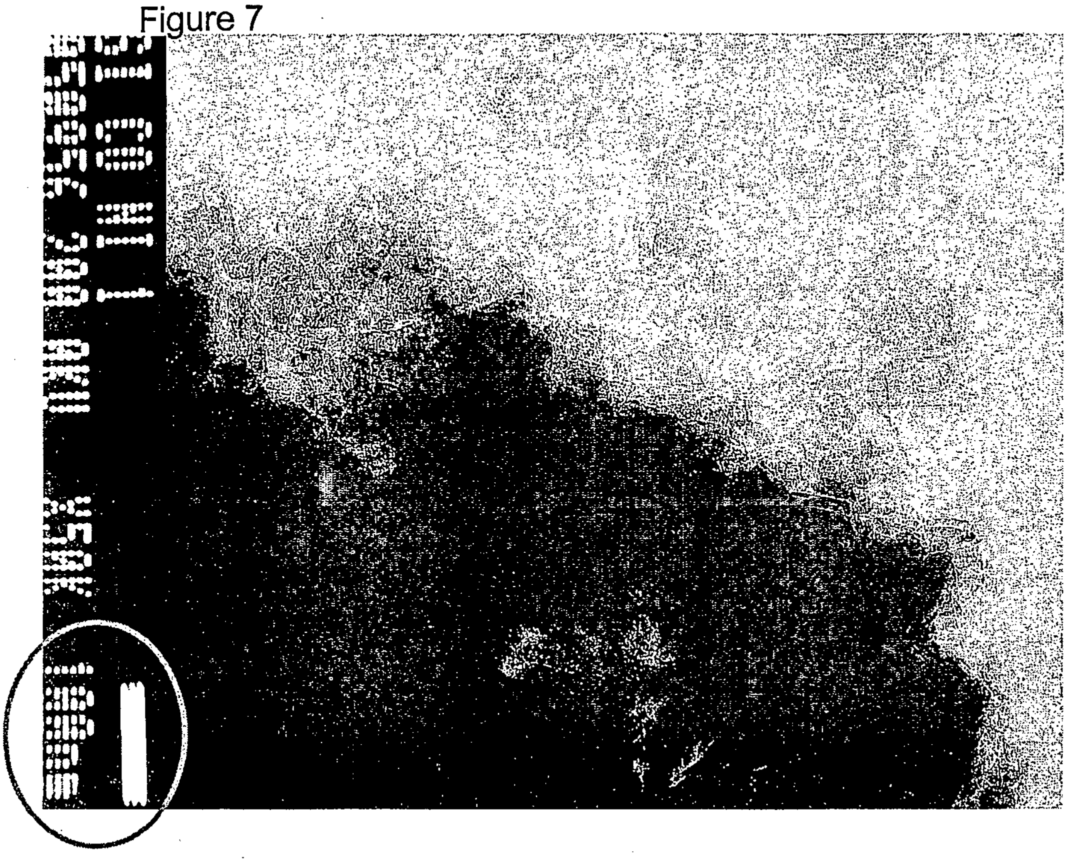

Figure 8

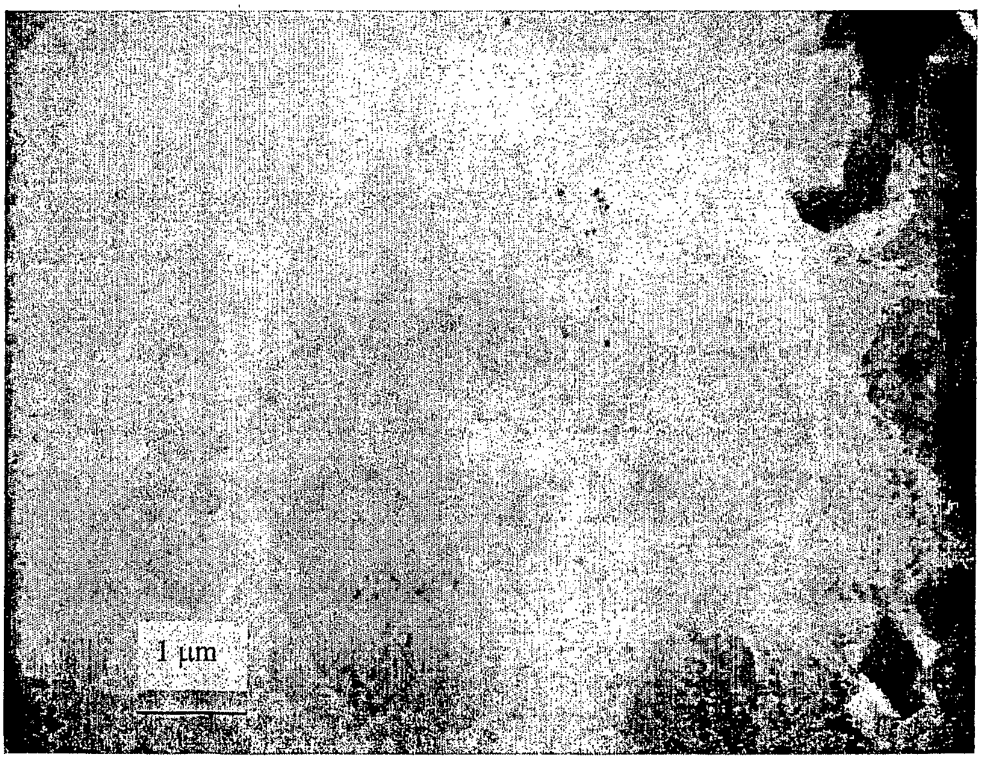

Figure 9a

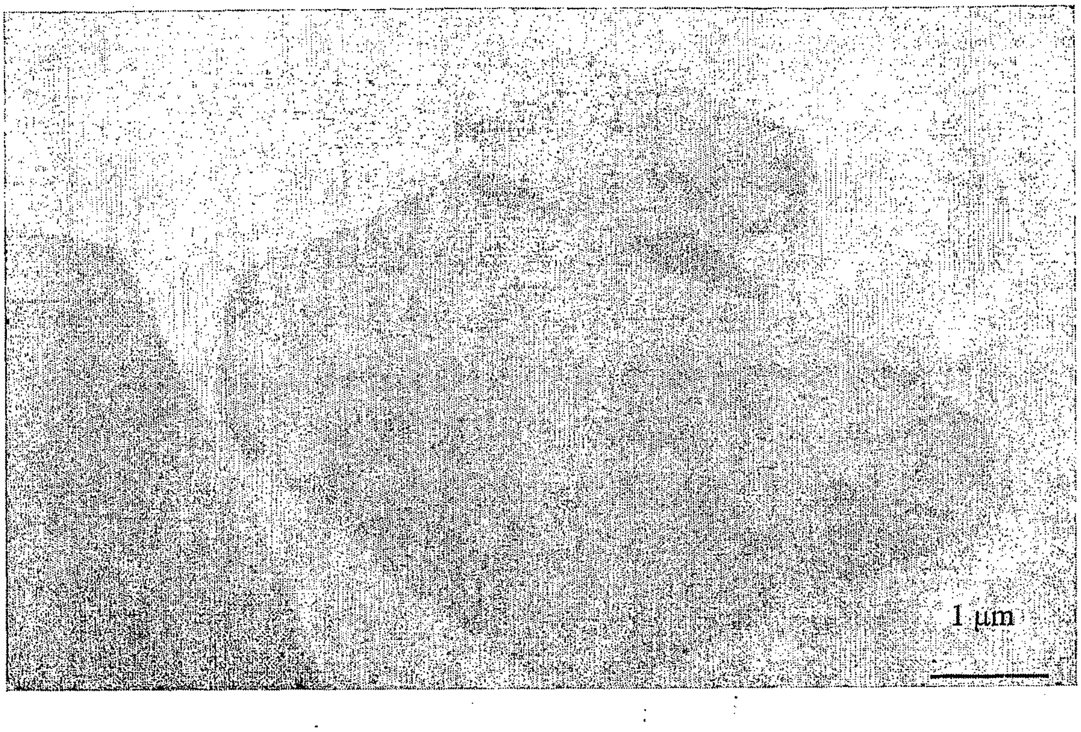


Figure 9b

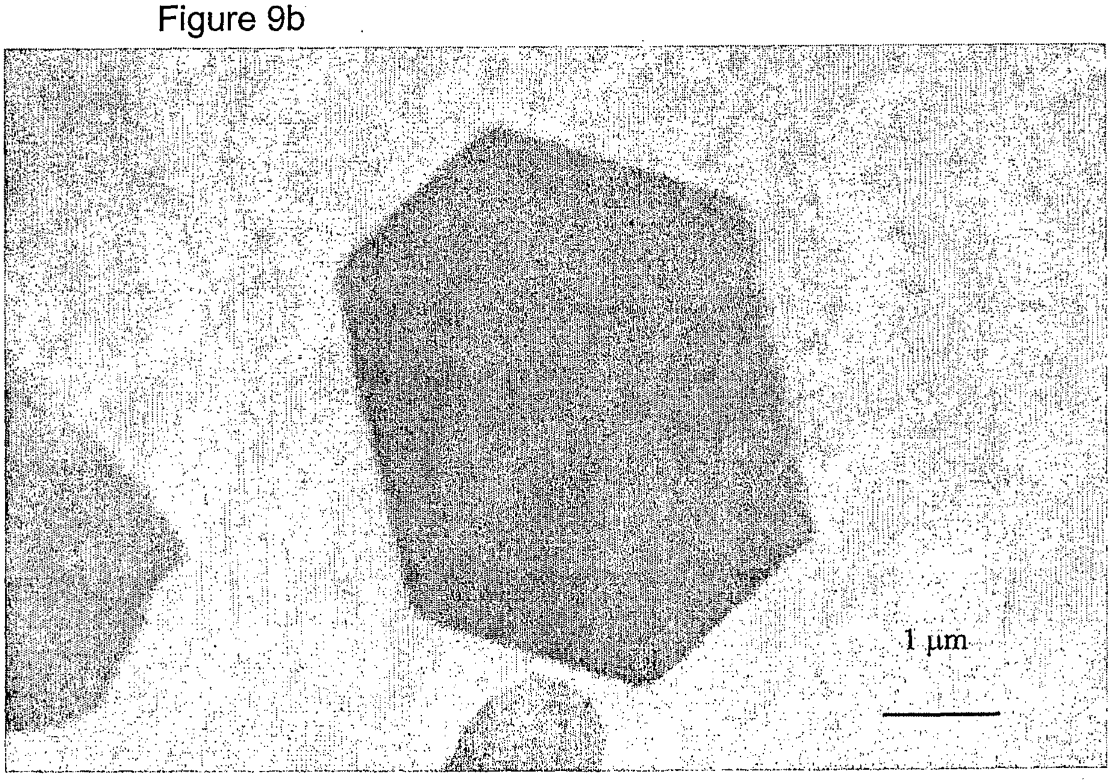

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **MARTIN et al.** Experimental study of Si-Ge tetrahedral solid solution in Ni-Co-Mg talcs. *Thin Solid Films,* 1992, vol. 222, 189-195
- **DECARREAU et al.** Synthèse et stabilité des stévensites kérolites et talcs, magnésiens et nickélifères, entre 80 et 240°C. *R. Acad. Scie. Paris-, t. 308, série II,* 1989, 301-306